# EUROPEAN PATENT APPLICATION

(11) **EP 4 636 193 A1**
(43) Date of publication of application: **22.10.2025**
(21) Application number: 23951262.7
(22) Date of filing: 27.09.2023
(51) Int. Cl.: E04F 15/02, E04F 15/10, B32B 33/00, B32B 27/00

(54) **COMPOSITE FLOOR PIECE AND PREPARATION METHOD THEREFOR**

(30) Priority: 05.09.2023 CN 202311136289
(71) Applicant: Banfert (Jiangsu) New Material Co., Ltd., Suqian, Jiangsu 223800 (CN)
(72) Inventor: LI, Xinxiong, Suqian, Jiangsu 223800 (CN); LI, Hui, Suqian, Jiangsu 223800 (CN); LIU, Shiguo, Suqian, Jiangsu 223800 (CN); ZHANG, Dongming, Suqian, Jiangsu 223800 (CN)
(74) Representative: Wächter, Jochen
(86) International application number: PCT/CN2023/121864
(87) International publication number: WO 2025/050445

(57) **Abstract**

A composite floor piece and a preparation method therefor. The composite floor piece comprises a first composite floor piece or a second composite floor piece, wherein the first composite flooring piece comprises a functional composite film, a transparent adhesive layer, a pattern layer and a base plate, which are sequentially stacked from top to bottom; the second composite floor piece comprises a color functional film, an adhesive layer and a base plate, which are sequentially stacked from top to bottom; the color functional film comprises a functional composite film and a printed film, which are arranged in a stacked manner, the printed film being in contact with the adhesive layer; and the functional composite film comprises a glaze layer, a radiation-cured layer and a polymer transparent film, which are sequentially stacked from top to bottom, the radiation-cured layer comprising an ultraviolet cured coating or a reactive polyurethane coating, the glaze layer comprising an overglaze layer or a composite glaze layer, the composite glaze layer comprising an overglaze layer and a ground glaze layer, and the ground glaze layer being in contact with the radiation-cured layer. The composite floor piece has good wear resistance and scratch resistance.

## Description

The present application claims priority to Chinese Patent Application No. CN202311136289.5 filed to the China National Intellectual Property Administration (CNIPA) on September 5, 2023 and entitled "COMPOSITE FLOORING AND PREPARATION METHOD THEREOF", which is incorporated herein by reference in its entirety.

### TECHNICAL FIELD

The present disclosure belongs to the technical field of decorative materials, and specifically relates to a composite flooring and a preparation method thereof.

### BACKGROUND

Polyvinyl chloride (PVC) flooring, as a "lightweight flooring", is a highly popular ground decorative material in recent years, and is widely used in airports, stations, shopping malls, hospitals, schools and other public places and home floor decoration. Likewise, as floor decorative materials, ceramic tiles are unique and irreplaceable, and show a market share that is much higher than that of the PVC flooring. In public places and high-end application places with high durability requirements, PVC flooring could not meet the application requirements. In home floor decoration in European and American countries, the PVC flooring could not replace tiles in kitchens and bathrooms; while in Chinese homes, the PVC flooring is only accepted for use in bedrooms and could not be used in the living room. The reasons lie in that: one the one hand, a production process of the PVC flooring could not achieve an extremely flat mirror-like effect of the ceramic tile surface on one hand; on the other hand, the surface of PVC flooring is generally only coated with an ultraviolet (UV) coating at (8-20) g/m², which provides extremely limited anti-fouling, wear-resistant, and scratch-resistant properties, resulting in the easiness of scratching and short-lasting stain resistance. However, the ceramic tiles have been criticized for their shortcomings such as heavy weight, high installation and transportation costs, easiness of breaking, difficulty in cutting, and poor foot feel, while the PVC flooring shows advantages of light weight, easiness of cutting and installation, and silence. Many manufacturers are looking for ways to replace ceramic tiles with PVC flooring but are unable to do so. For example, a mirror coating could be obtained on a PVC flooring by curtaining or film lamination, but the curing shrinkage of a thick coating may cause the PVC flooring to warp and deform.

In recent years, lightweight inorganic boards such as calcium silicate boards, phosphorus magnesium boards, and glass magnesium boards have gradually attracted attention in the field of decoration due to their lighter weight and lower cost than those of the ceramic tiles. If a tile-like mirror coating could be achieved on these inorganic boards, a leap forward could be achieved for decorative materials. CN202110821073.7 and CN114953666A disclose methods of preparing a mirror coating on the PVC flooring to achieve ceramic tile effects, but these methods have a relatively complex process and impose high coating requirements for the manufacturers of a final floor product. Based on this background, it has become an urgent problem in this field to explore a mirror coating with a simpler process that could quickly and effectively achieve the ceramic tile effects on different substrates.

Decorative film is a new type of decorative material prepared by using high-molecular polymers as a raw material, while adding various auxiliary agents through calendering and compounding. The decorative film could be combined with substrates such as wood, plastic boards, aluminum boards, iron boards, and inorganic boards to form multi-purpose decorative materials, which are widely used in household appliances, audio surface decoration, interior decoration, as well as decoration inside aircraft, ships, and trains. In recent years, decorative films have developed rapidly. However, due to the special requirements for wear resistance and scratch resistance in the ground field, there are extremely few decorative films on the market that could directly meet the requirements for use in the ground field. Generally, a substrate needs to be composited with the decorative films and then coated with a coating to improve the wear resistance and scratch resistance. Moreover, there is no mirror film that could meet the requirements for use in the ground field.

In summary, it is of great significance to develop a composite flooring that has excellent wear-resistance and scratch-resistance and could achieve the mirror effect of ceramic tiles.

### SUMMARY

An object of the present disclosure is to provide a composite flooring and a preparation method thereof. The composite flooring could be prepared using different substrates to achieve a ceramic tile effect, shows excellent wear resistance and scratch resistance, and has an easy process in applications.

To achieve the above object, the present disclosure provides the following technical solutions.

The present disclosure provides a composite flooring, including a first composite flooring or a second composite flooring, wherein
the first composite flooring includes, stacked in sequence from top to bottom, a functional composite film, a transparent adhesive layer, a pattern layer, and a substrate; and
the second composite flooring includes, stacked in sequence from top to bottom, a colored functional film, an adhesive layer, and a substrate, the colored functional film including a functional composite film and a printed film that are disposed through stacking, and the printed film being in contact with the adhesive layer, wherein
the functional composite film in the first composite flooring and the functional composite film in the second composite flooring each include, stacked in sequence from top to bottom, a glaze layer, a radiation-cured layer, and a transparent polymer film, wherein
the radiation-cured layer includes an ultraviolet (UV)-cured coating or a polyurethane reactive (PUR) coating; and
the glaze layer includes a surface glaze layer or a composite glaze layer, the composite glaze layer including a surface glaze layer and a bottom glaze layer, and the bottom glaze layer being in contact with the radiation-cured layer.

In some embodiments, the transparent polymer film is formed from a material including one selected from the group consisting of polyvinyl chloride (PVC), polypropylene (PP), a polyester, polycarbonate (PC), polyurethane (PU), and polymethyl methacrylate (PMMA); and
the transparent polymer film has a thickness of 30 µm to 1,000 µm.

In some embodiments, the radiation-cured layer has a thickness of 10 µm to 300 µm.

In some embodiments, under the condition that the radiation-cured layer is the ultraviolet-cured coating, a primer layer is further provided below the radiation-cured layer; and
the primer layer has a thickness of 1 µm to 20 µm.

In some embodiments, the surface glaze layer is formed from raw materials including, in parts by mass, 5 parts to 50 parts of wear-resistant particles, 10 parts to 80 parts of a multi-functionality acrylic resin, 0 parts to 50 parts of a photocurable resin, 1 part to 5 parts of a photoinitiator, 0 parts to 50 parts of a reactive diluent, and 0.1 parts to 5 parts of an auxiliary agent; and
the wear-resistant particles each have a Moh's hardness of greater than or equal to 9, and a particle size of 1 µm to 30 µm, and include at least one selected from the group consisting of aluminum oxide, zirconium carbide, silicon carbide, boron carbide, silicon nitride, boron nitride, and a diamond micro-powder.

In some embodiments, the raw materials further include nanoparticles;
the nanoparticles account for 0.5% to 10% by mass of the surface glaze layer; and
the nanoparticles include at least one selected from the group consisting of aluminum oxide, zirconium carbide, silicon carbide, boron carbide, silicon nitride, boron nitride, and a diamond, and the nanoparticles each have a particle size of 20 nm to 300 nm.

In some embodiments, the surface glaze layer has a thickness of 3 µm to 20 µm.

In some embodiments, the bottom glaze layer is formed from raw materials including, in parts by mass, 10 parts to 80 parts of an acrylic resin, 3 parts to 50 parts of a low-activity acrylate monomer, 0 parts to 50 parts of an acrylate monomer, 1 part to 7 parts of a photoinitiator, and 0 parts to 20 parts of an auxiliary agent; and
the low-activity acrylate monomer includes at least one selected from the group consisting of hydroxyethyl methacrylate (HEMA), hydroxypropyl methacrylate (HPMA), glycidyl methacrylate (GMA), isobornyl methacrylate (IBMA), and cyclohexyl methacrylate (CHMA).

In some embodiments, the bottom glaze layer has a thickness of 2 µm to 20 µm.

In some embodiments, the transparent adhesive layer is formed from a material including one selected from the group consisting of a transparent ultraviolet (UV) adhesive, a transparent two-component PU adhesive, and a transparent PUR adhesive; and
the adhesive layer is formed from a material including one selected from the group consisting of a two-component PU adhesive and a PUR adhesive.

In some embodiments, the pattern layer includes one selected from the group consisting of a printed film, a composite film of a printed film and a transparent film, and a digitally-printed pattern layer.

In some embodiments, the substrate comprises one selected from the group consisting of a plastic substrate, a wooden board, an inorganic board, and a composite board.

In some embodiments, under the condition that the substrate is the plastic substrate, the pattern layer includes one selected from the group consisting of a printed film, a composite film of a printed film and a transparent film, and a digitally-printed pattern layer; and
under the condition that the substrate is the wooden board, the inorganic board, or the composite board, the pattern layer is a digitally-printed pattern layer.

In some embodiments, the printed film and the transparent film are independently formed from a material including one selected from the group consisting of polyvinyl chloride (PVC), polypropylene (PP), a polyester, polycarbonate, and polymethyl methacrylate (PMMA).

In some embodiments, the printed film in the second composite flooring has a thickness of 20 µm to 300 µm.

The present disclosure further provides a method for preparing the composite flooring as described in above technical solutions, wherein under the condition that the composite flooring is the first composite flooring, the method includes the following steps:
preparing the glaze layer on a carrier film to obtain a precoated film;
applying a radiation-cured layer coating onto a surface of the transparent polymer film, applying the precoated film onto a surface of the radiation-cured layer coating, such that the glaze layer and the radiation-cured layer coating are in contact with each other, and then conducting radiation curing to obtain the functional composite film; and
preparing the pattern layer on a surface of the substrate, and then bonding the substrate with the pattern layer to the functional composite film through a transparent adhesive, to obtain the first composite flooring; or
under the condition that the composite flooring is the second composite flooring, the method includes the following steps:
   preparing the glaze layer on a carrier film to obtain a precoated film;
   bonding the transparent polymer film onto the printed film, coating a surface of the transparent polymer film with a radiation-cured layer coating, applying the precoated film onto a surface of the radiation-cured layer coating, such that the glaze layer and the radiation-cured layer coating are in contact with each other, and then conducting radiation curing, to obtain the colored functional film; and
   bonding the colored functional film onto the substrate through an adhesive to obtain the second composite flooring.

In the method, the carrier film includes one selected from the group consisting of a polyester film, a PP film, and a polyethylene (PE) film, and has a thickness of 20 µm to 500 µm.

In some embodiments, the glaze layer is the surface glaze layer, and the glaze layer is prepared by a process including coating a surface of the carrier film with a surface glaze layer coating, and conducting radiation curing to obtain the precoated film; or
the glaze layer is the composite glaze layer, and the glaze layer is prepared by a process including
coating a surface of the carrier film with a surface glaze layer coating, and conducting first radiation curing to obtain the surface glaze layer; and
coating a surface of the surface glaze layer with a bottom glaze layer coating, and conducting second radiation curing, to obtain the precoated film.

In some embodiments, under the condition that the substrate is the plastic substrate while the pattern layer is the printed film or the composite film of the printed film and the transparent film, the pattern layer is prepared by a process including thermally bonding the pattern layer onto the substrate; or
under the condition that the substrate is the plastic substrate while the pattern layer is the digitally-printed pattern layer, the pattern layer is prepared by a process including performing digital printing directly on the surface of the substrate; or
under the condition that the substrate is the wooden board, the inorganic board, or the composite board, the pattern layer is prepared by a process including performing digital printing directly on the surface of the substrate.

The present disclosure provides a composite flooring, including a first composite flooring or a second composite flooring, wherein the first composite flooring includes, stacked in sequence from top to bottom, a functional composite film, a transparent adhesive layer, a pattern layer, and a substrate; and the second composite flooring includes, stacked in sequence from top to bottom, a colored functional film, an adhesive layer, and a substrate, the colored functional film including a functional composite film and a printed film that are disposed through stacking, and the printed film being in contact with the adhesive layer, wherein the functional composite film in the first composite flooring and the functional composite film in the second composite flooring each include, stacked in sequence from top to bottom, a glaze layer, a radiation-cured layer, and a transparent polymer film, wherein the radiation-cured layer includes a UV-cured coating or a PUR coating, and the glaze layer includes a surface glaze layer and a composite glaze layer, the composite glaze layer including a surface glaze layer and a bottom glaze layer, and the bottom glaze layer being in contact with the radiation-cured layer. The composite flooring could be prepared using different substrates to achieve a ceramic tile effect, shows excellent wear resistance and scratch resistance, and has an easy process in applications.

### DETAILED DESCRIPTION OF THE EMBODIMENTS

The present disclosure provides a composite flooring, including a first composite flooring or a second composite flooring, wherein
the first composite flooring includes, stacked in sequence from top to bottom, a functional composite film, a transparent adhesive layer, a pattern layer, and a substrate; and
the second composite flooring includes, stacked in sequence from top to bottom, a colored functional film, an adhesive layer, and a substrate, the colored functional film including a functional composite film and a printed film that are disposed through stacking, and the printed film being in contact with the adhesive layer, wherein
the functional composite film in the first composite flooring and the functional composite film in the second composite flooring each include, stacked in sequence from top to bottom, a glaze layer, a radiation-cured layer, and a transparent polymer film, wherein
the radiation-cured layer includes a UV-cured coating or a PUR coating; and
the glaze layer includes a surface glaze layer or a composite glaze layer; the composite glaze layer including a surface glaze layer and a bottom glaze layer, and the bottom glaze layer being in contact with the radiation-cured layer.

In some embodiments of the present disclosure, the substrate includes a plastic substrate, a wooden board, an inorganic board, or a composite board. In some embodiments, under the condition that the substrate is the plastic substrate, the pattern layer includes a printed film, a composite film of a printed film and a transparent film, or a digitally-printed pattern layer. In some embodiments, under the condition that the substrate is the wooden board, the inorganic board, or the composite board, the pattern layer is a digitally-printed pattern layer.

In some embodiments of the present disclosure, under the condition that the pattern layer is the composite film of the printed film and the transparent film, the printed film is in contact with the substrate, and the transparent film is in contact with the transparent adhesive layer. In some embodiments of the present disclosure, a material for forming the printed film includes one of PVC, PP, a polyester, PC, and PMMA. In some embodiments, a material for forming the transparent film includes one of PVC, PP, a polyester, PC, and PMMA.

In some embodiments of the present invention, the pattern layer has a thickness of 20 µm to 300 µm.In some embodiments, under the condition that the pattern layer is the composite film of the printed film and the transparent film, the printed film has a thickness of 30 µm to 150 µm. In some embodiments, the transparent film has a thickness of 30 µm to 300 µm.

In some embodiments of the present disclosure, a material for forming the transparent adhesive layer includes a transparent UV adhesive, a transparent two-component PU adhesive, or a transparent PUR adhesive. In some embodiments, the transparent adhesive layer has a thickness of 10 µm to 100 µm, and preferably 15 µm to 60 µm.

In some embodiments of the present disclosure, the printed film in the second composite flooring has a thickness of 20 µm to 300 µm, preferably 30 µm to 200 µm, and even more preferably 50 µm to 150 µm.In some embodiments, a printing method for forming the printed film is letterpress printing, gravure printing, planographic printing, screen printing, or digital printing. In some embodiments, the printed film is prepared from a material including one of PVC, PP, a polyester, PC, and PMMA.

In some embodiments of the present disclosure, the adhesive layer is prepared from a material including a two-component PU adhesive and a PUR adhesive.

In some embodiments of the present disclosure, the transparent polymer film is prepared from a material including one of PVC, PP, a polyester, PC, PU, and PMMA. In some embodiments, the transparent polymer film has a thickness of 30 µm to 1,000 µm, preferably 100 µm to 800 µm, and more preferably 150 µm to 500 µm.

In some embodiments of the present disclosure, the radiation-cured layer has a thickness of 10 µm to 300 µm, preferably 15 µm to 250 µm, and more preferably 20 µm to 200 µm.

In the present disclosure, the radiation-cured layer includes a UV-cured coating or a PUR coating.

In the present disclosure, there is no special limitation on a specific type of the UV-cured coating, and types well known to those skilled in the art may be used.

In specific examples of the present disclosure, the UV-cured coating is prepared from raw materials including, in parts by mass, 10 parts to 80 parts of a two-functionality polyurethane acrylic resin, 10 parts to 60 parts of a multi-functionality polyurethane acrylic resin, 0 parts to 20 parts of a reactive diluent, 0 parts to 5 parts of a photoinitiator, and 0 parts to 40 parts of wear-resistant particles.

In some embodiments of the present disclosure, the two-functionality polyurethane acrylic resin has a weight-average molecular weight of 1,500 to 10,000, a Tg of -60 °C to 15 °C, and an elongation of greater than or equal to 50%. In some embodiments, the multi-functionality polyurethane acrylic resin has a functionality of greater than 2, a weight-average molecular weight of 1,500 to 10,000, and a Tg of greater than 50 °C. In some embodiments, the reactive diluent is a mono-functionality acrylate monomer, and the mono-functionality acrylate monomer has a Tg of 40 °C to 160 °C. In some embodiments, the wear-resistant particles each have a particle size of 10 µm to 300 µm, and preferably 30 µm to 100 µm. In some embodiments, the wear-resistant particles include at least one of a silicon micro-powder, a glass powder, a nepheline powder, calcined kaolin, aluminum oxide, a silicon carbide micro-powder, a silicon nitride micro-powder, a boron nitride micro-powder, and a diamond micro-powder.

In the present disclosure, the UV-cured layer has desirable toughness and low curing shrinkage. The large-molecular-weight main resin system combined with the high-Tg mono-functionality acrylate monomer could ensure that the coating has excellent toughness, low shrinkage, and desirable strength after curing.

In some embodiments of the present disclosure, under the condition that the radiation-cured layer is the ultraviolet-cured coating, a primer layer is further provided below the radiation-cured layer. In some embodiments, the primer layer has a thickness of 1 µm to 20 µm, and preferably 3 µm to 15 µm. There is no special limitation on a material for forming the primer layer, and any material well known to those skilled in the art may be used. The primer layer could ensure desirable adhesion between the radiation-cured coating and the transparent polymer film.

In the present disclosure, there is no special limitation on a specific type of the PUR coating, and types well known to those skilled in the art may be used.

In specific examples of the present disclosure, the PUR coating is prepared from raw materials including, in parts by mass, 15 parts to 30 parts of a polyisocyanate, 30 parts to 70 parts of a polyol, 5 parts to 15 parts of a hydroxyacrylate, 0.5 parts to 5 parts of a photoinitiator, and 5 parts to 30 parts of wear-resistant particles. There are no special limitations on types of the polyisocyanate, the polyol, the hydroxyacrylate monomer, and the photoinitiator, and types well known to those skilled in the art may be used. The wear-resistant particles are consistent with those described in the above technical solutions, and will not be repeated here.

In some embodiments of the present disclosure, the PUR coating is prepared from a process including the following steps: subjecting the polyisocyanate and the polyol to chain extending to obtain a PU prepolymer; conducting a partial end-capping reaction on the PU prepolymer with the hydroxyacrylate to obtain a PU characteristic structural material having an isocyanate active group and an acryloxy group; adding the photoinitiator and the wear-resistant particles thereto, conducting cross-linking under the action of UV, while moisture curing cross-linking to obtain the PUR coating.

In the present disclosure, the PUR coating does not contain small-molecule acrylate monomers. Moreover, only a small part of the acryloyloxy groups are reactive and cross-linked under the action of UV, while cross-linking mostly lies in PU with moisture curing characteristics, thereby resulting in extremely low curing shrinkage. The PUR coating has both UV curing activity and moisture curing activity, could reach a surface dry state after UV curing, and does not require the PUR component to react and mature before applying subsequent coatings, thereby achieving continuous production. Components of the PUR coating have overall relatively high molecular weight, and could react and cross-link to form urethane bonds and urea bonds, imparting the coating with excellent wear resistance and scratch resistance.

In the present disclosure, under the condition that the radiation-cured layer does not contain the wear-resistant particles, a mirror effect of the composite film is improved by an extremely high level, and a pass rate in terms of the mirror effect is greatly improved. This greatly improves tolerance to equipment, environment, and operating requirements. Under the condition that there are wear-resistant particles, the entire radiation-cured layer is filled with the wear-resistant particles. The aggregation of wear-resistant particles causes bulging, and the radiation-cured layer thus has a weak function on the accommodation of dust particles in the environment. Therefore, a dust-free environment is required to improve the pass rate. When using a tough intermediate coating without wear-resistant particles, the radiation-cured layer remains liquid when the glaze layer is transferred (described in the preparation steps below). Therefore, the radiation-cured layer without wear-resistant particles not only has enough space to accommodate dust particles in the environment, but also could smooth out uneven parts on a surface of the transparent polymer film, the primer layer, or the glaze layer.

In some embodiments of the present disclosure, the surface glaze layer is prepared from raw materials including, in parts by mass, 5 parts to 50 parts of wear-resistant particles, 10 parts to 80 parts of a multi-functionality acrylic resin, 0 parts to 50 parts of a photocurable resin, 1 part to 5 parts of a photoinitiator, 0 parts to 50 parts of a reactive diluent, and 0.1 parts to 5 parts of an auxiliary agent.

In some embodiments of the present disclosure, the wear-resistant particles each have a Moh's hardness of greater than or equal to 9. In some embodiments, the wear-resistant particles include at least one selected from the group consisting of aluminum oxide, zirconium carbide, silicon carbide, boron carbide, silicon nitride, boron nitride, and a diamond micro-powder. In some embodiments, the wear-resistant particles each have a particle size of 1 µm to 30 µm, and preferably 3 µm to 20 µm. The wear-resistant particles within this particle size range could ensure both better transparency and a higher volume concentration of the wear-resistant particles; after a transfer process, the wear-resistant particles are concentrated and arranged on the surface of the composite film, having a mirror effect. There are no special limitations on specific types of the multi-functionality acrylic resin and the photocurable resin, and types well known to those skilled in the art may be used.

In some embodiments of the present disclosure, the raw materials for preparing the surface glaze layer further include nanoparticles, and the nanoparticles account for 0.5% to 10% by mass of the surface glaze layer. In some embodiments, the nanoparticles include at least one selected from the group consisting of aluminum oxide, zirconium carbide, silicon carbide, boron carbide, silicon nitride, boron nitride, and a diamond. In some embodiments, the nanoparticles each have a particle size of 20 nm to 300 nm. A combination of the nanoparticles and the wear-resistant particles enables the surface glaze layer to achieve better wear-resistance. The nanoparticles could be directly used in surface glaze, or could be used in the surface glaze after being treated with resin through dispersion, coating and other processes.

In some embodiments of the present disclosure, the surface glaze layer has a thickness of 3 µm to 20 µm, and preferably 5 µm to 15 µm.

In some embodiments of the present disclosure, the bottom glaze layer is prepared from raw materials including, in parts by mass, 10 parts to 80 parts of an acrylic resin, 3 parts to 50 parts of a low-activity acrylate monomer, 0 parts to 50 parts of an acrylate monomer, 1 part to 7 parts of a photoinitiator, and 0 parts to 20 parts of an auxiliary agent.

In the present disclosure, there is no special limitation on a type of the acrylic resin, and types well known to those skilled in the art may be used. In some embodiments, the low-activity acrylate monomer includes at least one selected from the group consisting of HEMA, HPMA, GMA, IBMA, and CHMA. In some embodiments, the acrylate monomer is dipropylene glycol diacrylate. In some embodiments, the auxiliary agent includes a leveling agent, a wetting agent, a defoaming agent, and an inorganic transparent powder with a particle size less than 20 µm.

In some embodiments of the present disclosure, the bottom glaze layer has a thickness of 2 µm to 20 µm, and preferably 5 µm to 15 µm.

In the present disclosure, the composite glaze layer obtained by combining the bottom glaze layer and the surface glaze layer could be applied separately and stored for a long time. After the composite glaze layer is transferred, a desirable bonding force with the radiation-cured layer of the radiation-cured coating could always be ensured. On one hand, during the radiation curing, oxygen inhibition on the surface of the bottom glaze layer causes the low-activity acrylate monomer to be partially unreacted. After subsequent transfer to the surface of the radiation-cured layer, since the presence of carrier film isolates oxygen, the unreacted acrylate monomer in the composite glaze layer could cross-link with components in the radiation-cured layer during radiation curing. Therefore, there is a desirable adhesion between coatings. On the other hand, the bottom glaze layer reduces the unevenness of the surface caused by an inorganic powder in the surface glaze layer, which is more conducive to the subsequent formation of a mirror coating.

The present disclosure further provides a method for preparing the composite flooring, wherein under the condition that the composite flooring is the first composite flooring, the method includes the following steps:
preparing the glaze layer on a carrier film to obtain a precoated film;
applying a radiation-cured layer coating onto a surface of the transparent polymer film, applying the precoated film onto a surface of the radiation-cured layer coating, such that the glaze layer and the radiation-cured layer coating are in contact with each other, and then conducting radiation curing to obtain the functional composite film; and
preparing the pattern layer on a surface of the substrate, and then bonding the substrate with the pattern layer to the functional composite film through a transparent adhesive, to obtain the first composite flooring; or
under the condition that the composite flooring is the second composite flooring, the method includes the following steps:
   preparing the glaze layer on a carrier film to obtain a precoated film;
   bonding the transparent polymer film onto the printed film, coating a surface of the transparent polymer film with a radiation-cured layer coating, applying the precoated film onto a surface of the radiation-cured layer coating, such that the glaze layer and the radiation-cured layer coating are in contact with each other, and then conducting radiation curing, to obtain the colored functional film; and
   bonding the colored functional film onto the substrate through an adhesive to obtain the second composite flooring.

In the present disclosure, unless otherwise specified, all raw materials for preparation are commercially available products well known to those skilled in the art.

In some embodiments of the present disclosure, under the condition that the composite flooring is the first composite flooring, the method includes the following steps:
preparing the glaze layer on a carrier film to obtain a precoated film;
applying a radiation-cured layer coating onto a surface of the transparent polymer film, applying the precoated film onto a surface of the radiation-cured layer coating, such that the glaze layer and the radiation-cured layer coating are in contact with each other, and then conducting radiation curing to obtain the functional composite film; and
preparing the pattern layer on a surface of the substrate, and then bonding the substrate with the pattern layer to the functional composite film through a transparent adhesive, to obtain the first composite flooring.

In the present disclosure, the glaze layer is prepared on a carrier film to obtain a precoated film.

In some embodiments of the present disclosure, the carrier film includes a polyester (PET) film, a PP film, and a PE film. In some embodiments, the carrier film has a thickness of 20 µm to 500 µm, and preferably 30 µm to 200 µm. In some embodiments, the method further includes before preparing the glaze layer, a release agent is applied onto a surface of the carrier film. There are no special limitations on a type and a applying amount of the release agent, and types and coating amounts well known to those skilled in the art may be used. The release agent facilitates subsequent peeling of the carrier film. Taking advantage of the mirror-flat characteristics of the carrier film, the transferred glaze layer could achieve a mirror coating with a ceramic tile effect. In addition, the carrier film with different glossiness and textures could also be selected, and the transferred glaze layer could achieve different glossiness and texture effects.

In some embodiments of the present disclosure, under the condition that the glaze layer is the surface glaze layer, the glaze layer is prepared by a process including: coating a surface of the carrier film with a surface glaze layer coating, and conducting radiation curing to obtain the precoated film.

In some embodiments of the present disclosure, the radiation curing is conducted using a mercury lamp, a gallium lamp, a UV-LED lamp, or a halogen lamp. There is no special limitation on a process of the radiation curing, and processes well known to those skilled in the art may be used.

In some embodiments of the present disclosure, the glaze layer is the composite glaze layer, the glaze layer is prepared by a process including
coating a surface of the carrier film with the surface glaze layer coating, and conducting first radiation curing to obtain the surface glaze layer; and
coating a surface of the surface glaze layer with a bottom glaze layer coating, and conducting second radiation curing to obtain the precoated film.

In the present disclosure, the first radiation curing and the second radiation curing have the same condition parameters as those of the radiation curing defined above, and will not be repeated here.

In the present disclosure, a high-gloss mirror coating with a tile effect is prepared above the polymer film by a glaze coating transfer method, thereby obtaining a high-gloss mirror functional film with excellent wear resistance and scratch resistance. This solves the problem that the high-gloss mirror decorative film has poor wear resistance and scratch resistance and could not be used in the ground field.

In the present disclosure, one side of the surface glaze layer that contacts the carrier film is insulated from oxygen during radiation curing and not impacted by oxygen inhibition, such that the performance is greatly improved. Moreover, wear-resistant particles with high hardness and high volume concentration are concentrated and arranged on one side of the carrier film. After the transfer process, a glaze layer with excellent wear-resistant and scratch-resistant properties is formed; while the mirror-like properties of the carrier film result in a mirror-like coating.

In the present disclosure, after obtaining the precoated film, a surface of the transparent polymer film is coated with a radiation-cured layer coating, and the precoated film is applied onto a surface of the radiation-cured layer coating, such that the glaze layer and the radiation-cured layer coating are in contact with each other; and then radiation curing is conducted to obtain the functional composite film.

In some embodiments of the present disclosure, applying the radiation-cured layer coating onto a surface of the transparent polymer film includes: directly coating the surface of the transparent polymer film with the radiation-cured layer coating. In some embodiments, under the condition that a primer layer is further provided below the radiation-cured layer, applying the radiation-cured layer coating onto a surface of the transparent polymer film includes: coating the surface of the transparent polymer film with a primer layer coating, conducting curing, and then applying the radiation-cured layer coating.

In some embodiments of the present disclosure, the primer layer coating is applied with a coating thickness of 1 µm to 20 µm, and further preferably 3 µm to 15 µm.In some embodiments, the radiation-cured layer coating is applied with a coating thickness of 10 µm to 300 µm, and preferably 20 µm to 200 µm.

In some embodiments of the present disclosure, the radiation curing is conducted using a mercury lamp, a gallium lamp, a UV-LED lamp, a halogen lamp, or an EB lamp. There is no special limitation on a process of the radiation curing, and processes well known to those skilled in the art may be used.

In some embodiments of the present disclosure, the method further includes after the radiation curing is completed, removing the carrier film and then conducting re-radiation curing. There is no special limitation on a removal process, and processes well known to those skilled in the art may be used. A process of the re-radiation curing is consistent with that of the radiation curing defined in the above technical solutions, and will not be repeated here.

In the present disclosure, the pattern layer is prepared on a surface of the substrate, and then the substrate with the pattern layer is bonded to the functional composite film through a transparent adhesive, to obtain the first composite flooring.

In some embodiments of the present disclosure, under the condition that the substrate is the plastic substrate while the pattern layer is the printed film or the composite film of the printed film and the transparent film, the pattern layer is prepared by a process including thermally bonding the pattern layer onto the substrate. There is no special limitation on a thermal bonding process, and processes well known to those skilled in the art may be used.

In some embodiments of the present disclosure, under the condition that the substrate is the plastic substrate while the pattern layer is the digitally-printed pattern layer, the pattern layer is prepared by a process including performing digital printing directly on a surface of the substrate. In some embodiments, before the digital printing, the substrate is leveled, attached, filled, and covered in sequence. There are no special limitations on processes of the levelling, attaching, filling, and covering, and processes well known to those skilled in the art may be used.

In some embodiments of the present disclosure, under the condition that the substrate is the wooden board, the inorganic board, or the composite board, the pattern layer is prepared by a process including performing digital printing directly on a surface of the substrate. In some embodiments, before the digital printing, the substrate is leveled, attached, filled, and covered in sequence. There are no special limitations on processes of the levelling, attaching, filling, and covering, and processes well known to those skilled in the art may be used.

In the present disclosure, under the condition that the composite flooring is the second composite flooring, the method includes the following steps:
preparing the glaze layer on a carrier film to obtain a precoated film;
bonding the transparent polymer film onto the printed film, coating a surface of the transparent polymer film with a radiation-cured layer coating, applying the precoated film onto the surface of the radiation-cured layer coating, such that the glaze layer and the radiation-cured layer coating are in contact with each other, and then conducting radiation curing, to obtain the colored functional film; and
bonding the colored functional film onto the substrate through an adhesive to obtain the second composite flooring.

In the present disclosure, the glaze layer is prepared on a carrier film to obtain a precoated film.

In the present disclosure, the preparation of the glaze layer is consistent with that defined in the above technical solutions, and will not be repeated here.

In the present disclosure, after obtaining the precoated film, the transparent polymer film is bonded onto the printed film, a surface of the transparent polymer film is coated with a radiation-cured layer coating, and the precoated film is applied onto a surface of the radiation-cured layer coating, such that the glaze layer and the radiation-cured layer coating are in contact with each other, and then radiation curing is conducted to obtain the colored functional film.

In the present disclosure, there is no special limitation on a process of bonding the transparent polymer film onto the printed film, and processes well known to those skilled in the art may be used. In specific examples, the bonding is performed by thermal bonding. The processes of applying the radiation-cured layer coating onto the surface and the radiation curing are consistent with those defined in the above technical solutions, and will not be repeated here.

In the present disclosure, there is no special limitation on a process of bonding the substrate to the colored functional film using an adhesive, and processes well known to those skilled in the art may be used. In some embodiments, before the bonding, the substrate is leveled.

In the present disclosure, the composite flooring could achieve the effect of ceramic tiles. When applied to plastic substrates, especially SPC substrates or WPC substrates, the composite flooring could have a high-grade mirror effect, stain resistance, wear resistance and scratch resistance of ceramic tiles, as well as the advantages of plastic flooring, which is easy to cut, easy to install and transport, and could achieve groove and tongue, and provide comfortable foot feel. Therefore, the defects of ceramic tiles such as easy to break, high transportation and installation costs, and stiff foot feel, as well as the plastic flooring's poor surface wear resistance and scratch resistance, and the shrinkage and warping of thick coatings have been solved. The composite flooring could also replace ceramic tiles when applied to inorganic boards, and is lighter and cheaper than the ceramic tiles.

In the present disclosure, the composite flooring has a simple preparation process, high substrate selectivity, low energy consumption during the process, and is easy for mass production.

In order to further illustrate the present disclosure, the composite flooring and the preparation method thereof according to the present disclosure are described in detail below with reference to the accompanying drawings and examples, but the accompanying drawings and the examples should not be construed as limiting the scope of the present disclosure.

### Example 1

A printed film and a transparent polymer film were bonded by thermal bonding, wherein the printed film and the transparent polymer film were both prepared from PVC, the transparent polymer film had a thickness of 300 µm and was purchased from Foshan Tian'an Plastic Co., Ltd., China; the printed film had a thickness of 100 µm and was purchased from Hangzhou Lin'an Yinxing decorative material Co., Ltd, China.

A surface glaze layer coating was applied onto a mirror PET film with a thickness of 100 µm (with a coating thickness of 10 µm), and cured with a mercury lamp, obtaining a surface glaze layer, wherein the surface glaze layer coating included: 20 parts of wear-resistant particles, 37 parts of nine-functionality polyurethane acrylic resin, 20 parts of a nano-hybrid resin, 2 parts of a photoinitiator, 20 parts of a reactive diluent, 0.4 parts of a dispersant, 0.2 parts of a defoaming agent, and 0.4 parts of an anti-settling auxiliary agent; the wear-resistant particles were a silicon carbide micro-powder with a particle size of 10 µm; the nine-functionality polyurethane acrylic resin was TUN142 from Banfert New Materials Co., Ltd., China, the photoinitiator was 1173, the reactive diluent was dipropylene glycol diacrylate, the dispersant was BASF EFKA-AFCONA-4010, the defoaming agent was TEGO Airex 920, and the anti-settling auxiliary agent was fumed silica, e.g., Degussa R974; the nano-hybrid resin was obtained by dispersing and coating nanoparticles with a photocurable resin through a silane coupling agent, and the nano-hybrid resin included the following components: in parts by mass, 82 parts of the photocurable resin, 15 parts of the nanoparticles, and 3 parts of the silane coupling agent, the photocurable resin being an epoxy acrylic resin TUE21 of Banfert New Materials Co., Ltd., China, the nanoparticles were wear-resistant aluminum oxide with a particle size of 50 nm from Aladdin, and the silane coupling agent was Dow Corning 6011.

A bottom glaze layer coating was applied onto a surface of the surface glaze layer (with a coating thickness of 7 µm), and cured with a mercury lamp, obtaining a precoated film, wherein the bottom glaze layer coating included: 40 parts of an epoxy acrylic resin, 10 parts of a low-activity acrylate monomer, 30 parts of an acrylate monomer, and 4 parts of a photoinitiator; the epoxy acrylic resin was TUE75 from Banfert New Materials Co., Ltd., China, the low-activity acrylate monomer was HEMA, the acrylate monomer was dipropylene glycol diacrylate, and the photoinitiator was 1173.

A primer layer coating was applied onto a surface of the transparent polymer film (with a coating thickness of 8 µm), cured with a mercury lamp, and then coated with a radiation-cured layer coating (with a coating thickness of 70 µm), wherein the primer layer coating was BPVC-1335 from Banfert New Materials Co., Ltd., China; the radiation-cured layer coating was MEC-04 from Banfert New Materials Co., Ltd., China (including: 55 parts of a two-functionality polyurethane acrylic resin, 27 parts of a six-functionality polyurethane acrylic resin, 15 parts of a reactive diluent, and 3 parts of a photoinitiator; the two-functionality polyurethane acrylic resin being TUN149 from Banfert New Materials Co., Ltd., China, with a molecular weight of 4,000, a Tg of -15 °C, and an elongation of 150%; the six-functionality polyurethane acrylic resin being TUN202 from Banfert New Materials Co., Ltd., China, with a molecular weight of 3,000 and a Tg of 60 °C; the reactive diluent being a mono-functionality acrylate monomer, including 5 parts of HEMA (having a Tg of 55 °C) and 10 parts of 4-acryloylmorpholine (having a Tg of 145 °C); the photoinitiator including 0.5 parts of TPO and 2.5 parts of 184).

The precoated film was applied onto the radiation-cured layer coating, and they were subjected to radiation curing with a gallium lamp; the carrier film was immediately removed, and then they were subjected to re-radiation curing with a mercury lamp, obtaining a colored functional film.

The colored functional film was bonded onto a leveled SPC substrate through a PUR adhesive, obtaining a second composite flooring.

### Example 2

A printed film and a transparent polymer film were bonded by thermal bonding, wherein the printed film and the transparent polymer film were both prepared from PVC; the transparent polymer film had a thickness of 300 µm and was purchased from Foshan Tian'an Plastic Co., Ltd., China; the printed film had a thickness of 100 µm and was purchased from Hangzhou Lin'an Yinxing Decorative Materials Co., Ltd, China.

A surface glaze layer coating was applied onto a mirror PET film with a thickness of 100 µm (with a coating thickness of 15 µm), and cured with a mercury lamp, obtaining a surface glaze layer, wherein the surface glaze layer coating included: 40 parts of wear-resistant particles, 20 parts of nine-functionality polyurethane acrylic resin, 15 parts of a photocurable resin, 2 parts of a photoinitiator, 22 parts of a reactive diluent, 0.4 parts of a dispersant, 0.2 parts of a defoaming agent, and 0.4 parts of an anti-settling auxiliary agent; the wear-resistant particles included 5 parts of a diamond micro-powder, 10 parts of a silicon carbide micro-powder, and 25 parts of aluminum oxide, each having a particle size of 10 µm; the nine-functionality polyurethane acrylic resin was TUN142 from Banfert New Materials Co., Ltd., China, the photocurable resin was an epoxy acrylic resin TUE75 from Banfert New Materials Co., Ltd., China, the photoinitiator was 1173, the reactive diluent included 10 parts of pentaerythritol triacrylate and 12 parts of dipropylene glycol diacrylate, the dispersant was BASF EFKA-AFCONA-4010, the defoaming agent was TEGO Airex 920, and the anti-settling auxiliary agent was fumed silica, e.g., Degussa R974.

A bottom glaze layer coating was applied onto a surface of the surface glaze layer (with a coating thickness of 5 µm), and cured with a mercury lamp, obtaining a precoated film, wherein the bottom glaze layer coating included: 40 parts of an epoxy acrylic resin, 10 parts of a low-activity acrylate monomer, 30 parts of an acrylate monomer, and 4 parts of a photoinitiator; the epoxy acrylic resin was TUE75 from Banfert New Materials Co., Ltd., China, the low-activity acrylate monomer was HEMA, the acrylate monomer was dipropylene glycol diacrylate, and the photoinitiator was 1173.

A primer layer coating was applied onto a surface of the transparent polymer film (with a coating thickness of 8 µm), cured with a mercury lamp, and a radiation-cured layer coating was then applied thereon (with a coating thickness of 70 µm), wherein the primer layer coating was BPVC-1335 from Banfert New Materials Co., Ltd., China; the radiation-cured layer coating was MEC-04 from Banfert New Materials Co., Ltd. (including: 55 parts of a two-functionality polyurethane acrylic resin, 27 parts of a six-functionality polyurethane acrylic resin, 15 parts of a reactive diluent, and 3 parts of a photoinitiator; the two-functionality polyurethane acrylic resin was TUN149 from Banfert New Materials Co., Ltd., China, with a molecular weight of 4,000, a Tg of -15 °C, and an elongation of 150%; the six-functionality polyurethane acrylic resin was TUN202 from Banfert New Materials Co., Ltd., China, with a molecular weight of 3,000 and a Tg of 60 °C; the reactive diluent was a mono-functionality acrylate monomer, including 5 parts of HEMA (having a Tg of 55 °C) and 10 parts of 4-acryloylmorpholine (having a Tg of 145 °C); the photoinitiator included 0.5 parts of TPO and 2.5 parts of 184).

The precoated film was applied onto the radiation-cured layer coating, they were subjected to radiation curing with a gallium lamp, the carrier film was immediately removed, and they were then subjected to re-radiation curing with a mercury lamp, obtaining a colored functional film.

The colored functional film was bonded onto a leveled SPC substrate through a PUR adhesive, obtaining a second composite flooring.

### Example 3

A colored functional film was prepared according to the procedures described in Example 1.

The colored functional film was bonded onto a leveled calcium silicate board through a PUR adhesive, obtaining a second composite flooring.

### Example 4

A colored functional film was prepared according to procedures described in Example 1.

The colored functional film was bonded onto a leveled glass magnesium board through a two-component PU adhesive, obtaining a second composite flooring.

### Example 5

A printed film and a transparent polymer film were bonded by thermal bonding, wherein the transparent polymer film was prepared from poly (ethylene terephthalateco-1,4-cylclohexylenedimethylene terephthalate) (PETG), and the transparent polymer film had a thickness of 500 µm and was purchased from Anhui Aokai Material Co., Ltd., China; the printed film was prepared from PVC, and the polymer printing film had a thickness of 50 µm and was purchased from Hangzhou Lin'an Yinxing decorative material Co., Ltd, China.

A precoated film was prepared according to procedures described in Example 1.

A radiation-cured layer coating was applied onto a surface of the transparent polymer film (with a coating thickness of 30 µm), wherein the radiation-cured layer coating was a PUR coating with both UV-curing activity and moisture-curing activity, and was ST-UN258 from Banfert New Materials Co., Ltd, China.

The precoated film was applied onto the radiation-cured layer coating, they were subjected to radiation curing with a gallium lamp, the carrier film was immediately removed, and they were then subjected to re-radiation curing with a mercury lamp, obtaining a colored functional film.

The colored functional film was bonded onto a leveled SPC substrate through a PUR adhesive, obtaining a second composite flooring.

### Example 6

A radiation-cured layer and a glaze layer were prepared on a surface of a transparent polymer film according to procedures as described in Example 1, obtaining a functional composite film, wherein the transparent polymer film was prepared from PVC, and the transparent polymer film had a thickness of 400 µm and was purchased from Foshan Tian'an Plastic Co., Ltd, China.

A PVC substrate and a printed film (pattern layer) were thermally bonded, and then an obtained functional composite film was applied onto the printed film through a transparent UV adhesive, obtaining a first composite flooring, wherein the printed film was prepared from PVC, had a thickness of 70 µm and was purchased from Hangzhou Lin'an Yinxing decorative material Co., Ltd, China.

### Example 7

A first composite flooring was prepared, wherein a transparent polymer film was prepared from a polyester (PET), and the transparent polymer film had a thickness of 200 µm and was purchased from Anhui Aokai Material Co., Ltd, China.

A precoated film was prepared according to procedures as described in Example 1.

A radiation-cured layer coating was applied onto a surface of the transparent polymer film (with a coating thickness of 30 µm), wherein the radiation-cured layer coating was ST-UN258 of Banfert New Materials Co., Ltd, China.

The precoated film was applied onto the radiation-cured layer coating, they were subjected to radiation curing with a gallium lamp, the carrier film was immediately removed, and they were then subjected to re-radiation curing with a mercury lamp, obtaining the functional composite film.

A PVC substrate and a printed film (pattern layer) were thermally bonded, and then the obtained functional composite film was bonded onto the printed film through a transparent UV adhesive, obtaining a first composite flooring, wherein the printed film was prepared from PVC, had a thickness of 70 µm and was purchased from Hangzhou Lin'an Yinxing decorative materials Co., Ltd, China.

### Example 8

A first composite flooring was prepared, wherein a transparent polymer film was prepared from a polyester (PET), and the transparent polymer film had a thickness of 500 µm and was purchased from Anhui Aokai Material Co., Ltd., China.

A precoated film was prepared according to procedures as described in Example 1, except that a matte PET film with a thickness of 70 µm was used as the carrier film.

A primer layer coating was applied onto a surface of the transparent polymer film (with a coating thickness of 8 µm), cured with a mercury lamp, and a radiation-cured layer coating (with a coating thickness of 70 µm) was applied thereon, wherein the primer layer coating was BPVC-1335 from Banfert New Materials Co., Ltd., China; the radiation-cured layer coating was MEC-04 from Banfert New Materials Co., Ltd., China (including: 55 parts of a two-functionality polyurethane acrylic resin, 27 parts of a six-functionality polyurethane acrylic resin, 15 parts of a reactive diluent, and 3 parts of a photoinitiator; the two-functionality polyurethane acrylic resin was TUN149 from Banfert New Materials Co., Ltd., China, with a molecular weight of 4,000, a Tg of -15 °C, and an elongation of 150%; the six-functionality polyurethane acrylic resin was TUN202 from Banfert New Materials Co., Ltd., China, with a molecular weight of 3,000 and a Tg of 60 °C; the reactive diluent was a mono-functionality acrylate monomer, including 5 parts of HEMA (having a Tg of 55 °C) and 10 parts of 4-acryloylmorpholine (having a Tg of 145 °C); the photoinitiator included 0.5 parts of TPO and 2.5 parts of 184).

The precoated film was applied onto the radiation-cured layer coating, they were subjected to radiation curing with a gallium lamp, the carrier film was immediately removed, and they were then subjected to re-radiation curing with a mercury lamp, obtaining the functional composite film.

An inorganic fiber board was leveled, attached, filled, and covered, and digital printing was performed thereon, obtaining a pattern layer; and the functional composite film was bonded onto the pattern layer of the inorganic fiber board through a transparent UV adhesive, obtaining a first composite flooring.

### Example 9

A transparent composite film was prepared according to procedures as described in Example 8.

A PVC substrate was leveled, attached, filled, and covered, and digital printing was preformed thereon, obtaining a pattern layer; and the functional composite film was bonded onto the pattern layer of the PVC substrate through a transparent UV adhesive, obtaining a first composite flooring.

### Example 10

A printed film and a transparent polymer film were bonded according to procedures as described in Example 1.

A precoated film was prepared according to procedures as described in Example 1.

A primer layer coating was applied onto a surface of the transparent polymer film (with a coating thickness of 8 µm), cured with a mercury lamp, and a radiation-cured layer coating was applied thereon (with a coating thickness of 120 µm), wherein the primer layer coating was BPVC-1335 from Banfert New Materials Co., Ltd., China; the radiation-cured layer coating included: 42 parts of a two-functionality polyurethane acrylic resin, 20 parts of a six-functionality polyurethane acrylic resin, 15 parts of a reactive diluent, 3 parts of a photoinitiator, and 20 parts of wear-resistant particles; the two-functionality polyurethane acrylic resin was TUN149 from Banfert New Materials Co., Ltd., China, with a molecular weight of 4,000, a Tg of -15 °C, and an elongation of 150%; the six-functionality polyurethane acrylic resin was TUN202 from Banfert New Materials Co., Ltd., China, with a molecular weight of 3,000 and a Tg of 60 °C; the reactive diluent was a mono-functionality acrylate monomer, including 5 parts of HEMA (having a Tg of 55 °C) and 10 parts of 4-acryloylmorpholine (having a Tg of 145 °C); the photoinitiator included 0.5 parts of TPO and 2.5 parts of 184; the wear-resistant particles were aluminum oxide with a particle size of 50 µm.

The precoated film was applied onto the radiation-cured layer coating, they were subjected to radiation curing with a gallium lamp, the carrier film was immediately removed, and they were then subjected to re-radiation curing with a mercury lamp, obtaining the colored functional film.

The colored functional film was bonded onto an SPC substrate through a PUR adhesive, obtaining a second composite flooring.

### Example 11

A printed film and a transparent polymer film were bonded according to procedures as described in Example 1.

A surface glaze layer coating was applied onto a mirror PET film with a thickness of 50 µm (with a coating thickness of 5 µm), and cured with a mercury lamp, obtaining a precoated film, wherein the surface glaze layer coating included: 20 parts of wear-resistant particles, 37 parts of nine-functionality polyurethane acrylic resin, 20 parts of a nano-hybrid resin, 2 parts of a photoinitiator, 20 parts of a reactive diluent, 0.4 parts of a dispersant, 0.2 parts of a defoaming agent, and 0.4 parts of an anti-settling auxiliary agent; the wear-resistant particles were a silicon carbide micro-powder with a particle size of 10 µm; the nine-functionality polyurethane acrylic resin was TUN142 from Banfert New Materials Co., Ltd., China, the photoinitiator was 1173, the reactive diluent was dipropylene glycol diacrylate, the dispersant was BASF EFKA-AFCONA-4010, the defoaming agent was TEGO Airex 920, and the anti-settling auxiliary agent was fumed silica, e.g., Degussa R974; the nano-hybrid resin was obtained by dispersing and coating nanoparticles with a photocurable resin through a silane coupling agent; the nano-hybrid resin included the following components: in parts by mass, 82 parts of the photocurable resin, 15 parts of nanoparticles, and 3 parts of the silane coupling agent; the photocurable resin was an epoxy acrylic resin TUE21 of Banfert New Materials Co., Ltd., China, the nanoparticles were wear-resistant aluminum oxide with a particle size of 50 nm from Aladdin, and the silane coupling agent was Dow Corning 6011.

A primer layer coating was applied onto a surface of the transparent polymer film (with a coating thickness of 8 µm), cured with a mercury lamp, and a radiation-cured layer coating (with a coating thickness of 70 µm) was applied thereon, wherein the primer layer coating was BPVC-1335 from Banfert New Materials Co., Ltd., China; the radiation-cured layer coating was MEC-04 from Banfert New Materials Co., Ltd. (including: 55 parts of a two-functionality polyurethane acrylic resin, 27 parts of a six-functionality polyurethane acrylic resin, 15 parts of a reactive diluent, and 3 parts of a photoinitiator; the two-functionality polyurethane acrylic resin was TUN149 from Banfert New Materials Co., Ltd., China, with a molecular weight of 4,000, a Tg of -15 °C, and an elongation of 150%; the six-functionality polyurethane acrylic resin was TUN202 from Banfert New Materials Co., Ltd., China, with a molecular weight of 3,000 and a Tg of 60 °C; the reactive diluent was a mono-functionality acrylate monomer, including 5 parts of HEMA (having a Tg of 55 °C) and 10 parts of 4-acryloylmorpholine (having a Tg of 145 °C); the photoinitiator included 0.5 parts of TPO and 2.5 parts of 184).

The precoated film was applied onto the radiation-cured layer coating, they were subjected to radiation curing with a gallium lamp, the carrier film was immediately removed, and they were then subjected to re-radiation curing with a mercury lamp, obtaining the colored functional film.

The colored functional film was bonded onto an SPC substrate through a PUR adhesive, obtaining a second composite flooring.

### Performance testing

### (1) Scratch resistance

According to the standard of GB/T 9279.1-2015, the scratch resistance of the composite floorings obtained in Examples 1 to 11, SPC flooring, and ceramic tiles was tested, with a needle diameter of 0.5 mm. The higher test data represents better scratch resistance.

### (2) Impact resistance

According to the standard of GB/T 17657-2013, the impact resistance of the composite floorings obtained in Examples 1 to 11, SPC flooring, and ceramic tiles was tested.

### (3) Wear resistance

According to the standard of GB/T 1768-2006, the wear resistance of the composite floorings obtained in Examples 1 to 11, SPC flooring, and ceramic tiles was tested. The test conditions included: a wear value was tested by grinding for 100 revolutions with P180 sandpaper at a load of 500 g. The smaller wear value represents better wear resistance.

### (4) Repeated cross scratches

According to the additional test method HSP1305MM of EN 16094-2021, the composite floorings obtained in Examples 1 to 11, SPC flooring, and ceramic tiles were tested for their resistance to repeated cross scratches. The evaluation levels ranged from Grades C1 to C5 from best to worst.

### (5) Pollution resistance

According to the standard of GB/T 17657-2013, the pollution resistance of the composite floorings obtained in Examples 1 to 11, SPC flooring, and ceramic tiles was tested. The contaminants used in the test were coffee, 25% sodium hydroxide, and iodine tincture, and the evaluation levels ranged from Grade 5 to Grade 1 from best to worst.

The test results are shown in Table 1.

**Table 1 Performance test results of composite flooring obtained in Examples 1 to 11**

| | Scratch resistance | Impact resistance | Wear resistance (mg) | Repeated cross scratches | Pollution resistance | | |
|---|---|---|---|---|---|---|---|
| | | | | | Coffee | 25% sodium hydroxide | Iodine tincture |
| Example 1 | 16N | No abnormality | 2.8 | Grade C2 | Grade 5 | Grade 5 | Grade 5 |
| Example 2 | 15N | No abnormality | 1.8 | Grade C2 | Grade 5 | Grade 5 | Grade 5 |
| Example 3 | 14N | 3 ring cracks | 2.5 | Grade C2 | Grade 5 | Grade 5 | Grade 5 |
| Example 4 | 14N | 3 ring cracks | 4.3 | Grade C2 | Grade 5 | Grade 5 | Grade 5 |
| Example 5 | 19N | No abnormality | 2.1 | Grade C2 | Grade 5 | Grade 5 | Grade 5 |
| Example 6 | 16N | No abnormality | 3.1 | Grade C2 | Grade 5 | Grade 5 | Grade 5 |
| Example 7 | 20N | No abnormality | 2.4 | Grade C2 | Grade 5 | Grade 5 | Grade 5 |
| Example 8 | 21N | No abnormality | 2.9 | Grade C2 | Grade 5 | Grade 5 | Grade 5 |
| Example 9 | 19N | No abnormality | 2.8 | Grade C2 | Grade 5 | Grade 5 | Grade 5 |
| Example 10 | 15N | No abnormality | 1.5 | Grade C2 | Grade 5 | Grade 5 | Grade 5 |
| Example 11 | 12N | No abnormality | 2.8 | Grade C2 | Grade 5 | Grade 5 | Grade 5 |
| SPC flooring | 7N | No abnormality | 21.7 | Grade C4 | Grade 5 | Grade 4 | Grade 4 |
| Ceramic tiles | 20N | Crushing | 1.4 | Grade C3 | Grade 5 | Grade 5 | Grade 5 |

As shown in Table 1, the composite flooring prepared by using the composite film according to the present disclosure could achieve a ceramic tile surface effect with mirror characteristics, and combined the elasticity of plastic flooring (excellent impact resistance) with the excellent wear resistance, scratch resistance, and pollution resistance of ceramic tiles.

Although the present disclosure is described in detail in conjunction with the foregoing examples, they are only a part of, not all of, the examples of the present disclosure. Other examples could be obtained based on these examples without creative efforts, and all of these examples shall fall within the scope of the present disclosure.

## Claims

1. A composite flooring, comprising a first composite flooring or a second composite flooring, wherein
the first composite flooring comprises, stacked in sequence from top to bottom, a functional composite film, a transparent adhesive layer, a pattern layer, and a substrate; and
the second composite flooring comprises, stacked in sequence from top to bottom, a colored functional film, an adhesive layer, and a substrate, the colored functional film comprising a functional composite film and a printed film that are disposed through stacking, and the printed film being in contact with the adhesive layer, wherein
the functional composite film in the first composite flooring and the functional composite film in the second composite flooring each comprise, stacked in sequence from top to bottom, a glaze layer, a radiation-cured layer, and a transparent polymer film, wherein
the radiation-cured layer comprises an ultraviolet-cured coating or a polyurethane reactive (PUR) coating; and
the glaze layer comprises a surface glaze layer or a composite glaze layer, the composite glaze layer comprising a surface glaze layer and a bottom glaze layer, and the bottom glaze layer being in contact with the radiation-cured layer.

2. The composite flooring as claimed in claim 1, wherein the transparent polymer film is formed from a material comprising one selected from the group consisting of polyvinyl chloride, polypropylene, a polyester, polycarbonate, polyurethane, and polymethyl methacrylate; and
the transparent polymer film has a thickness of 30 µm to 1,000 µm.

3. The composite flooring as claimed in claim 1, wherein the radiation-cured layer has a thickness of 10 µm to 300 µm.

4. The composite flooring as claimed in claim 1 or 3, wherein under the condition that the radiation-cured layer is the ultraviolet-cured coating, a primer layer is further provided below the radiation-cured layer; and
the primer layer has a thickness of 1 µm to 20 µm.

5. The composite flooring as claimed in claim 1, wherein the surface glaze layer is formed from raw materials comprising, in parts by mass, 5 parts to 50 parts of wear-resistant particles, 10 parts to 80 parts of a multi-functionality acrylic resin, 0 parts to 50 parts of a photocurable resin, 1 part to 5 parts of a photoinitiator, 0 parts to 50 parts of a reactive diluent, and 0.1 parts to 5 parts of an auxiliary agent; and
the wear-resistant particles each have a Moh's hardness of greater than or equal to 9, and a particle size of 1 µm to 30 µm, and comprise at least one selected from the group consisting of aluminum oxide, zirconium carbide, silicon carbide, boron carbide, silicon nitride, boron nitride, and a diamond micro-powder.

6. The composite flooring as claimed in claim 5, wherein the raw materials further comprise nanoparticles;
the nanoparticles account for 0.5% to 10% by mass of the surface glaze layer;
the nanoparticles comprise at least one selected from the group consisting of aluminum oxide, zirconium carbide, silicon carbide, boron carbide, silicon nitride, boron nitride, and a diamond; and
the nanoparticles each have a particle size of 20 nm to 300 nm.

7. The composite flooring as claimed in claim 1, 5, or 6, wherein the surface glaze layer has a thickness of 3 µm to 20 µm.

8. The composite flooring as claimed in claim 1, wherein the bottom glaze layer is formed from raw materials comprising, in parts by mass, 10 parts to 80 parts of an acrylic resin, 3 parts to 50 parts of a low-activity acrylate monomer, 0 parts to 50 parts of an acrylate monomer, 1 part to 7 parts of a photoinitiator, and 0 parts to 20 parts of an auxiliary agent; and
the low-activity acrylate monomer comprises at least one selected from the group consisting of hydroxyethyl methacrylate, hydroxypropyl methacrylate, glycidyl methacrylate, isobornyl methacrylate, and cyclohexyl methacrylate.

9. The composite flooring as claimed in claim 1 or 8, wherein the bottom glaze layer has a thickness of 2 µm to 20 µm.

10. The composite flooring as claimed in claim 1, wherein the transparent adhesive layer is formed from a material comprising one selected from the group consisting of a transparent ultraviolet adhesive, a transparent two-component polyurethane adhesive, and a transparent PUR adhesive; and
the adhesive layer is formed from a material comprising one selected from the group consisting of a two-component polyurethane adhesive and a PUR adhesive.

11. The composite flooring as claimed in claim 1, wherein the substrate comprises one selected from the group consisting of a plastic substrate, a wooden board, an inorganic board, and a composite board;
under the condition that the substrate is the plastic substrate, the pattern layer comprises one selected from the group consisting of a printed film, a composite film of a printed film and a transparent film, and a digitally-printed pattern layer; and
under the condition that the substrate is the wooden board, the inorganic board, or the composite board, the pattern layer is a digitally-printed pattern layer.

12. The composite flooring as claimed in claim 1, wherein the printed film and the transparent film are independently formed from a material comprising one selected from the group consisting of polyvinyl chloride, polypropylene, a polyester, polycarbonate, and polymethyl methacrylate.

13. The composite flooring as claimed in claim 1, wherein the printed film in the second composite flooring has a thickness of 20 µm to 300 µm.

14. A method for preparing the composite flooring as claimed in any one of claims 1 to 13, wherein under the condition that the composite flooring is the first composite flooring, the method comprises the steps of
preparing the glaze layer on a carrier film to obtain a precoated film;
applying a radiation-cured layer coating onto a surface of the transparent polymer film, applying the precoated film onto a surface of the radiation-cured layer coating, such that the glaze layer and the radiation-cured layer coating are in contact with each other, and then conducting radiation curing to obtain the functional composite film; and
preparing the pattern layer on a surface of the substrate, and then bonding the substrate with the pattern layer to the functional composite film through a transparent adhesive, to obtain the first composite flooring; or
under the condition that the composite flooring is the second composite flooring, the method comprises the steps of
preparing the glaze layer on a carrier film to obtain a precoated film;
bonding the transparent polymer film onto the printed film, coating a surface of the transparent polymer film with a radiation-cured layer coating, applying the precoated film onto a surface of the radiation-cured layer coating, such that the glaze layer and the radiation-cured layer coating are in contact with each other, and then conducting radiation curing, to obtain the colored functional film; and
bonding the colored functional film onto the substrate through an adhesive to obtain the second composite flooring.

15. The method as claimed in claim 14, wherein the carrier film comprises one selected from the group consisting of a polyester film, a polypropylene film, and a polyethylene film, and has a thickness of 20 µm to 500 µm.

16. The method as claimed in claim 14, wherein the glaze layer is the surface glaze layer, and the glaze layer is prepared by a process comprising
coating a surface of the carrier film with a surface glaze layer coating, and conducting radiation curing to obtain the precoated film; or
wherein the glaze layer is the composite glaze layer, and the glaze layer is prepared by a process comprising
coating a surface of the carrier film with a surface glaze layer coating, and conducting first radiation curing to obtain the surface glaze layer; and
coating a surface of the surface glaze layer with a bottom glaze layer coating, and conducting second radiation curing, to obtain the precoated film.

17. The method as claimed in claim 14, wherein under the condition that the substrate is a plastic substrate while the pattern layer is a printed film or a composite film of a printed film and a transparent film, the pattern layer is prepared by a process comprising:
thermally bonding the pattern layer onto the substrate; or
under the condition that the substrate is a plastic substrate while the pattern layer is a digitally-printed pattern layer, the pattern layer is prepared by a process comprising
performing digital printing directly on the surface of the substrate; or
under the condition that the substrate is a wooden board, an inorganic board, or a composite board, the pattern layer is prepared by a process comprising
performing digital printing directly on the surface of the substrate.
